(19) Europäisches Patentamt
European Patent Office
Office européen des brevets

(11) **EP 2 318 893 B1**

(12) **EUROPÄISCHE PATENTSCHRIFT**

(45) Veröffentlichungstag und Bekanntmachung des Hinweises auf die Patenterteilung:
**04.09.2013 Patentblatt 2013/36**

(21) Anmeldenummer: **10735288.2**

(22) Anmeldetag: **22.07.2010**

(51) Int Cl.:
**G05D 1/08** (2006.01)

(86) Internationale Anmeldenummer:
**PCT/EP2010/060645**

(87) Internationale Veröffentlichungsnummer:
**WO 2011/009918 (27.01.2011 Gazette 2011/04)**

(54) **VERFAHREN ZUM BEREITSTELLEN EINES PILOTWARN-SIGNALS FÜR EINEN PILOTEN EINES FLUGZEUGES, COMPUTERPROGRAMMPRODUKT UND WARNVORRICHTUNG**

METHOD FOR PROVIDING A PILOT WARNING SIGNAL FOR A PILOT OF AN AIRCRAFT, COMPUTER PROGRAM PRODUCT, AND WARNING DEVICE

PROCÉDÉ DE FOURNITURE D'UN SIGNAL D'AVERTISSEMENT DU PILOTE POUR UN PILOTE D'UN AVION, PROGICIEL D'ORDINATEUR ET DISPOSITIF D'AVERTISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **23.07.2009 DE 102009027979**
**23.07.2009 US 227885 P**

(43) Veröffentlichungstag der Anmeldung:
**11.05.2011 Patentblatt 2011/19**

(73) Patentinhaber: **Airbus Operations GmbH**
**21129 Hamburg (DE)**

(72) Erfinder: **GIESSELER, Hans-Gerd**
**25469 Halstenbek (DE)**

(74) Vertreter: **Isarpatent**
**Patent- und Rechtsanwälte**
**Postfach 44 01 51**
**80750 München (DE)**

(56) Entgegenhaltungen:
**EP-A1- 0 262 702    US-A- 5 590 853**
**US-A- 6 002 349**

EP 2 318 893 B1

**Beschreibung**

Die vorliegende Erfindung betrifft ein Verfahren zum Bereitstellen eines Pilotwarn-Signals für einen Piloten eines Flugzeuges. Die vorliegende Erfindung betrifft ferner ein Computerprogrammprodukt und eine Warnvorrichtung.

Obwohl auf beliebige Bereiche anwendbar, wird die vorliegende Erfindung in Bezug mit einem Flugzeug oder mit einem Passagierflugzeug näher erläutert.

Das technische Gebiet der Erfindung betrifft die Warnung eines Piloten bei unsachgemäßer Betätigung eines Steuerorgans des Flugzeuges, insbesondere eines Pedals zur Steuerung des/der Seitenruder des Flugzeuges.

Falls der Pilot des Flugzeuges Dubletten, insbesondere wiederholte Dubletten, als Pedal-Input appliziert, so werden die lateralen Freiheitsgrade Gieren, Rollen und Schieben angeregt und dies kann zu einer Anregung der Taumelschwingung des Flugzeuges über das Seitenruder führen.

Geschieht diese Anregung mit der Eigenfrequenz der Taumelschwingung (Dutch Roll Mode), so treten starke Antworten der Flugzeugstruktur aufgrund von Resonanz auf. Die Dämpfung der Taumelschwingung wird herkömmlicherweise durch die Wirkung des Flugregelsystems, insbesondere des Gierdämpfers, verbessert (erhöht).

Die oben erwähnte Antwort wird noch verstärkt, wenn zusätzlich die Gierdämpfer-Autorität des Flugregelsystems beschränkt werden kann. Infolge der verbleibenden geringeren Dämpfung führt dies zu einer verstärkten lateralen flugmechanischen Antwort. Folglich können entsprechend hohe Lasten an den Flugzeugkomponenten, wie z.B. an dem Seitenleitwerk, auftreten.

Herkömmlicherweise wird das Problem der erhöhten Flugzeugantwort durch eine erhöhte Gierdämpfung mittels der Seitenruder abgemildert, solange der Gierdämpfer noch Autorität hat. Diese Maßnahme ist allerdings im Falle der Einschränkung der Gierdämpferwirkung wirkungslos.

Die Alternative wäre eine Erhöhung der Gierdämpfung durch die Roll-Steuerflächen an den Flügeln des Flugzeuges.

Allerdings ist diese Maßnahme nicht effektiv, da die gierdämpfende Wirkung der Roll-Steuerflächen gering ist. Auch aus praktischen Handhabungsaspekten sind dieser Alternative enge Grenzen gesetzt.

Eine weitere Alternative zur Erhöhung der Gierdämpfer-Autorität bedeutet nachteiligerweise zusätzliche Hardware für die mechanische Signalübertragung von dem Pedal auf die Seitenruder des Flugzeuges und damit erhöhte Kosten und ein zusätzliches Gewicht.

Die Druckschrift US 6 002 349 A offenbart ein Verfahren zum Erzeugen eines Warnsignals für einen Piloten eines Flugzeugs bei einer Betätigung eines vom Piloten betätigbaren Pedals, welches von der Pedalbetätigung abhängig ist.

Demnach ist es eine Aufgabe der vorliegenden Erfindung, eine Warnung für den Piloten zur Beseitigung obiger Nachteile bereitzustellen.

Erfindungsgemäß wird diese Aufgabe durch ein Verfahren mit den Merkmalen des Patentanspruchs 1, durch ein Computerprogrammprodukt mit den Merkmalen des Patentanspruchs 10 und durch eine Warnvorrichtung mit den Merkmalen des Patentanspruchs 11 gelöst.

Ein Computerprogramm-Produkt wie ein Computerprogramm-Einrichtung kann beispielsweise als Speichermedium, wie Speicherkarte, USB-Stick, Floppy, CD-ROM, DVD, Festplatte oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Einrichtung erfolgen.

Die jeweilige Einrichtung, also die erste, zweite, dritte, vierte und/oder die fünfte Einrichtung, ist vorzugsweise hardwaretechnisch implementiert, jedoch könnte deren Funktionalität auch softwaretechnisch implementiert sein. Bei einer hardwaretechnischen Implementierung kann die jeweilige Einrichtung als Vorrichtung, zum Beispiel als Computer, Mikroprozessor, programmgesteuerte Einrichtung oder auch als Teil eines Systems, zum Bespiel als Computer-System, ausgebildet sein. Bei einer softwaretechnischen Implementierung kann die jeweilige Einrichtung als Computerprogrammprodukt, als eine Funktion, als eine Routine, als Teil eines Programmcodes oder als ausführbares Objekt ausgebildet sein.

Unterstellt man dem Piloten des Flugzeuges grundsätzlich, dass er die Taumelschwingung - über längere zeit gesehen - dämpfen will, so tritt nur dann ein Problem auf, wenn der Pilot die Pedale phasenverkehrt betätigt.

Ein Vorteil der vorliegenden Erfindung liegt darin, dem Piloten in einem solchen Fall ein Pilotwarn-Signal zur Anzeige seiner Fehleinschätzung hinsichtlich der Phasenbeziehung der Pedale zur Flugzeugbewegung auszugeben. Der, durch das Pilotwarn-Signal, gewarnte Pilot kann seinen Fehler korrigieren und sachgemäße Pedalaktionen durchführen bzw. auf Pedalaktionen verzichten.

Insgesamt ist die vorgeschlagene Lösung eine sehr kostengünstige Möglichkeit, ein vom Piloten nicht beabsichtigtes, aber dennoch verursachtes Anregen der Taumelschwingung und die sich ergebenden Lastenkonsequenzen zu vermeiden.

In den Unteransprüchen finden sich vorteilhafte Ausgestaltungen und Verbesserungen der Erfindung.

Erfindungsgemäß ist das zweite Signal als ein Schiebewinkel-Signal zur Angabe eines Schiebewinkels des Flugzeuges, als ein lateraler Lastfaktor des Flugzeuges oder als eine Drehrate des Flugzeuges um die Hochachse des Flugzeuges ausgebildet.

Gemäß einer bevorzugten Weiterbildung ist das zweite Signal als ein rekonstruiertes Schiebewinkel-Signal des Flugzeuges ausbildet ist.

Gemäß einer weiteren bevorzugten Weiterbildung wird die jeweilige Winkeländerung mittels einer komplexen Arithmetik oder mittels einer Polardarstellung bestimmt.

Gemäß einer weiteren bevorzugten Weiterbildung ist das zweite Signal als negative Drehrate um die Hochachse (negative body yawrate) ausbildet.

Das erste und zweite Signal werden vorzugsweise zur Glättung tiefpassgefiltert.

Gemäß einer weiteren bevorzugten Weiterbildung sind folgende Schritte zum Feststellen der Betätigung des Pedals zur Vermeidung von Fehlalarmen vorgesehen:

- Bestimmen einer ersten zeitlichen Ableitung des Pedal-Winkels des bereitgestellten ersten Signals zur Bereitstellung einer Pedalgeschwindigkeit; und
- Schätzen einer relevanten Betätigung des Pedals, in Abhängigkeit des bereitgestellten ersten Signals und der bestimmten ersten zeitlichen Ableitung, zur Bereitstellung eines ersten logischen Betätigungssignals.

Gemäß einer weiteren bevorzugten Weiterbildung sind folgende Schritte zum Feststellen der Betätigung des Pedals zur Vermeidung von Fehlalarmen vorgesehen:

- Bereitstellen eines unkritischen Bereiches für den Pedal-Winkel des vom Piloten betätigbaren Pedals;
- Bestimmen eines oberen kritischen Bereiches oberhalb des unkritischen Bereiches;
- Bestimmen eines unteren kritischen Bereiches unterhalb des unkritischen Bereiches;
- Detektieren des Eintretens in einen (oberen oder unteren) kritischen Bereich mit nachfolgender zeitnahen Transition in den gegenüberliegenden kritischen Bereich;
- Setzen eines zweiten logischen Betätigungssignals auf einen positiven logischen Signalpegel bei einer detektierten Transition.

Gemäß einer weiteren bevorzugten Weiterbildung wird das Pilotwarn-Signal generiert, falls das erste und das zweite logische Betätigungssignal auf einen logischen Signalpegel gesetzt sind und falls die bestimmte Winkeländerung des ersten Wertepaares größer als ein erster Schwellwert oder die Winkeländerung des Inkrement-Wertepaares größer als ein zweiter Schwellwert ist.

Gemäß einer weiteren bevorzugten Weiterbildung wird das erste Signal mittels einer Messung des Pedal-Winkels bereitgestellt.

Gemäß einer weiteren bevorzugten Weiterbildung wird das erste Signal in Abhängigkeit eines gemessenen Seitenruderausschlages und eines Gierdämpfungs-Signals berechnet.

Gemäß einer weiteren möglichen Weiterbildung wird als erstes Signal der Seitenruderwinkel gewählt, wodurch eine Wirkung der Summe aus Pedalbetätigung durch den Piloten und des Gierdämpfersignals auf das Flugzeug bewertet wird.

Gemäß einer weiteren bevorzugten Weiterbildung werden das erste Signal und das zweite Signal zu bestimmten Zeitpunkten abgetastet. Weiter werden die Wertepaare aus dem abgetasteten ersten Signal und dem abgetasteten zweiten Signal als komplexe Zahl mit dem ersten Signal als Realteil und dem zweiten Signal als Imaginärteil abgebildet, wobei das Verhältnis der relativen Änderungen des ersten und zweiten Signals von zwei Wertepaaren zu zwei aufeinanderfolgenden Zeitpunkten als Änderung des Phasenwinkels der komplexen Zahl ausgebildet ist.

Gemäß einer weiteren bevorzugten Weiterbildung wird ein erstes logisches Taumelschwingungs-Signal zur Angabe einer signifikant angeregten Taumelschwingung des Flugzeuges auf einen positiven logischen Signalpegel gesetzt, falls der Betrag der komplexen Zahl (gebildet hier z.B. aus einer gefilterten und normierten Roll- und Gierrate) einen Schwellenwert überschreitet.

Gemäß einer weiteren bevorzugten Weiterbildung wird das Pilotwarn-Signal generiert, falls das erste logische Taumelschwingungs-Signal auf einen positiven logischen Signalpegel gesetzt ist und falls das erste und zweite logische Bestätigungssignal auf einen positiven logischen Signalpegel gesetzt sind.

Gemäß einer weiteren bevorzugten Weiterbildung wird ein zweites logisches Taumelschwingungs-Signal zur Angabe einer Taumelschwingung des Flugzeuges auf einen positiven logischen Signalpegel gesetzt, falls das erste logische Taumelschwingungs-Signal für eine erste vorbestimmte Zeitdauer auf einen logischen Signalpegel gesetzt war und dieser Signalpegel weiter gehalten wird. Es wird auf einen nichtpositiven logischen Signalpegel gesetzt wird, falls das dritte logische Taumelschwingungs-Signal für eine zweite vorbestimmte Zeitdauer auf einen nichtpositiven logischen Signalpegel gesetzt war und dieser Signalpegel gehalten wird.

Gemäß einer weiteren bevorzugten Weiterbildung wird das Pilotwarn-Signal generiert, falls das zweite logische Taumelschwingungs-Signal auf einen positiven logischen Signalpegel gesetzt ist und falls das erste und zweite logische Betätigungssignal auf einen positiven logischen Signalpegel gesetzt sind.

Gemäß einer weiteren bevorzugten Weiterbildung umfasst die erste Einrichtung einen als potentiometrisch, induktiv, kapazitiv und/oder optisch ausgebildeten Winkelaufnehmer, welcher dazu ausgebildet ist, den Winkel eines vom Piloten betätigten Pedals zu erfassen und zur Verfügung zu stellen. Denkbar wäre auch, dass die erste Einrichtung einen als potentiometrisch, induktiv, kapazitiv und/oder optisch ausgebildeten Linearwandler umfasst, welcher dazu ausgebildet ist, eine lineare Bewegung, welche die Position eines vom Piloten betätigten Pedals darstellt, zu erfassen und zur Verfügung zu stellen.

Gemäß einer weiteren bevorzugten Weiterbildung umfasst die zweite Einrichtung eine Messeinrichtung, die eine negative Drehrate des Flugzeugs um seine Hochachse durch direkte Messung erfasst und daraus das zweite Signal ableitet.

Gemäß einer weiteren bevorzugten Weiterbildung ist eine programmgesteuerte Einrichtung, insbesondere ein Mikrocontroller oder Mikroprozessor, vorgesehen, welche zumindest eine der ersten bis fünften Einrichtungen und vorzugsweise sämtliche der ersten bis fünften Einrichtungen beinhaltet.

Gemäß einer weiteren bevorzugten Weiterbildung ist die programmgesteuerte Einrichtung dazu ausgelegt, das erste Signal (x) aus einem erfassten Seitenruderwinkel und/oder einer erfassten Gierdämpfung zu berechnen. Denkbar wäre auch, dass die programmgesteuerte Einrichtung ausgebildet ist, das zweite Signal (y) durch eine Arithmetik mit komplexen Zahlen oder durch eine Polardarstellung zu bestimmen.

Gemäß einer weiteren bevorzugten Weiterbildung ist die programmgesteuerte Einrichtung dazu ausgelegt, das Wertepaar (x, y) zu bilden, und ist ein Speicher vorgesehen, in welchem mindestens ein Wertepaar (x, y) zu einem ersten Zeitpunkt (k-1) und mindestens ein Inkrement des Wertepaars (x, y) zu dem ersten Zeitpunkt (k-1) ablegbar sind, und ist die programmgesteuerte Einrichtung dazu ausgebildet, die Winkeländerung (V) aus dem Wertepaar (x, y) zu dem ersten Zeitpunkt (k-1) und dem Wertepaar (x, y) zu einem zweiten Zeitpunkt (k) und die Winkeländerung (I) des Inkrements aus dem Inkrement des Wertepaars (x, y) zu dem ersten Zeitpunkt (k-1) und dem Inkrement des Wertepaars (x, y) zu dem zweiten Zeitpunkt (k) zu bestimmen.

Gemäß einer weiteren bevorzugten Weiterbildung, umfasst die fünfte Einrichtung eine optische Warneinrichtung, welche als Signalleuchte oder Monitor ausgebildet ist oder eine akustische Warneinrichtung, welche als Lautsprecher ausgebildet ist, oder eine haptische Warneinrichtung, welche als Vorrichtung zur Erzeugung einer Vibration ausgebildet ist.

Gemäß einer weiteren bevorzugten Weiterbildung umfasst die fünfte Einrichtung eine beliebige Kombination aus einer optischen Warneinrichtung, einer akustischen Warneinrichtung und einer haptischen Warneinrichtung.

Die Erfindung wird im Folgenden anhand von Ausführungsbeispielen unter Bezugnahme auf die beiliegenden Figuren näher erläutert.

Von den Figuren zeigen:

Fig. 1     ein Ablaufdiagramm eines Ausführungsbeispiels eines Verfahrens zum Bereitstellen eines PilotwarnSignals;

Fig. 2     ein schematisches Diagramm zur Darstellung einer Winkeländerung der Wertepaare zu zwei aufeinanderfolgenden Zeitpunkten bei einer Dämpfung einer Taumelschwingung des Flugzeuges;

Fig. 3     ein schematisches Diagramm zur Darstellung einer Winkeländerung der Wertepaare zu zwei aufeinanderfolgenden Zeitpunkten bei einer Anregung einer Taumelschwingung des Flugzeuges;

Fig. 4     ein schematisches Blockschaltbild eines ersten Ausführungsbeispiels einer Vorrichtung zum Bereitstellen eines Pilotwarn-Signals;

Fig. 5     ein schematisches Blockschaltbild eines zweiten Ausführungsbeispiels einer Vorrichtung zum Bereitstellen eines Pilotwarn-Signals;

Fig. 6     ein schematisches Blockschaltbild einer Vorrichtung zum Bereitstellen eines Pilotwarn-Signals, und

Fig. 7     ein schematisches Blockschaltbild eines dritten Ausführungsbeispiels einer Vorrichtung zum Bereitstellen eines Pilotwarn-Signals.

In den Figuren bezeichnen dieselben Bezugzeichen gleiche oder funktionsgleiche Komponenten, soweit nichts Gegenteiliges angegeben ist.

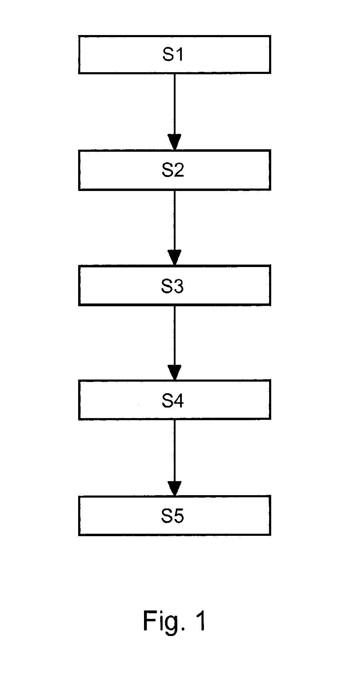

In Fig. 1 ist ein schematisches Ablaufdiagramm eines Ausführungsbeispiels eines Verfahrens zum Bereitstellen eines Pilotwarn-Signals P dargestellt.

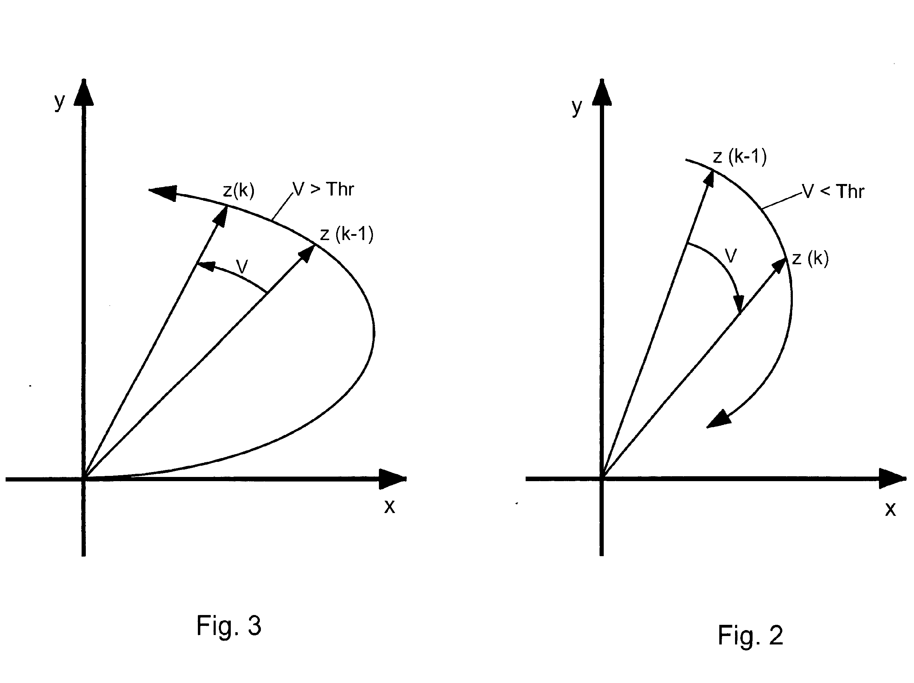

Nachfolgend wird das erfindungsgemäße Verfahren anhand des Blockschaltbildes in Fig. 1 mit Bezug auf die Fig. 2, 3 und 4 detailliert erläutert. Das Ausführungsbeispiel des Verfahrens nach Fig. 1 hat folgende Verfahrensschritte S1 bis S5:

Verfahrensschritt S1:

Ein erstes Signal x zur Angabe eines Pedal-Winkels eines vom Piloten betätigbaren Pedals wird bereitgestellt.
vorzugsweise wird das erste Signal x mittels einer Messung des Pedal-Winkels bereitgestellt. Alternativ kann das erste Signal x auch in Abhängigkeit eines gemessenen Seitenruderausschlages und eines Gierdämpfungs-Signals berechnet werden. Möglich ist es auch, den Seitenruder-Ausschlag direkt zu verwenden. In diesem Fall bezieht sich die Aussage, die das System liefert, auf die Summe der Wirkung von Gierdämpfer und Betätigung des Pedals durch den Piloten.

Verfahrensschritt S2:

Ein zweites Signal y wird bereitgestellt, welches eine direkte dynamische Abhängigkeit von dem Pedal-Winkel hat. Eine direkte dynamische Abhängigkeit bedeutet, dass sich eine Änderung des Pedal-Winkels direkt und unmittelbar auf den Wert des zweiten Signals y auswirkt.
Dabei ist das zweite Signal y beispielsweise als ein Schiebewinkel-Signal zur Angabe eines Schiebewinkels des Flugzeuges, als ein lateraler Lastfaktor des Flugzeuges oder als eine negative Drehrate des Flugzeuges um die Hochachse des Flugzeuges ausgebildet.
Des Weiteren kann das zweite Signal y auch als ein rekonstruiertes Schiebewinkel-Signal des Flugzeuges ausgebildet sein.
Im Gegensatz zum gemessenen Schiebewinkel enthält der rekonstruierte Schiebewinkel nicht die direkte Böenwirkung einer Böe auf das Flugzeug.

Verfahrensschritt S3:

Zu jedem bestimmten Zeitpunkt k, beispielsweise zu jedem Abtastzeitpunkt k der beiden Signale x und y, wird ein jeweiliges Wertepaar x, y, insbesondere x(k), y(k), aus dem ersten Signal x und zweiten Signal y gebildet.

Verfahrensschritt S4:

Zu zwei aufeinanderfolgenden Zeitpunkten k-1, k wird jeweils eine Winkeländerung V der Wertepaare x, y und eine Winkeländerung I des Inkrements der Wertepaare x, y bestimmt.
Dazu zeigt Fig. 2 ein schematisches Diagramm zur Darstellung einer Winkeländerung V der Wertepaare x, y zu zwei aufeinanderfolgenden Zeitpunkten k-1, k bei einer Dämpfung einer Taumelschwingung des Flugzeuges. Demgegenüber zeigt Fig. 3 ein schematisches Diagramm zur Darstellung einer Winkeländerung V der Wertepaare x, y zu zwei aufeinanderfolgenden Zeitpunkten k-1, k bei einer Anregung einer Taumelschwingung des Flugzeuges.
Dabei ist ein Punkt z von k bestimmt durch:

$$z(k) = z(x(k), y(k)) = x(k) + i\, y(k)$$

Gemäß Fig. 2 ergibt sich eine Dämpfung der Taumelschwingung bei V < Thr. Folglich ergibt sich eine Anregung der Taumelschwingung des Flugzeuges gemäß Fig. 3 bei V > Thr. [d.h. V ist der Winkel der Änderung k-1 → k in z2]

Verfahrensschritt S5:

Das Pilotwarn-Signal P wird bei festgestellter Betätigung B des Pedals und festgestellter angeregter Taumelschwingung T des Flugzeuges generiert, falls die bestimmte Winkeländerung V der Wertepaare x, y größer als ein erster Schwellwert TH1 ist oder die bestimmte Winkeländerung I des Inkrements der Wertepaare x, y größer als ein zweiter Schwellwert TH2 ist.
Infolge des generierten Pilotwarn-Signals P wird eine akustische, optische und/oder mechanische Ausgabe für den Piloten zu dessen Warnung bereitgestellt und ausgegeben. Des Weiteren kann das Pilotwarn-Signal P auch dazu eingesetzt werden, eine Rekonfiguration des Flugzeug-Regelsystems zu bewirken.

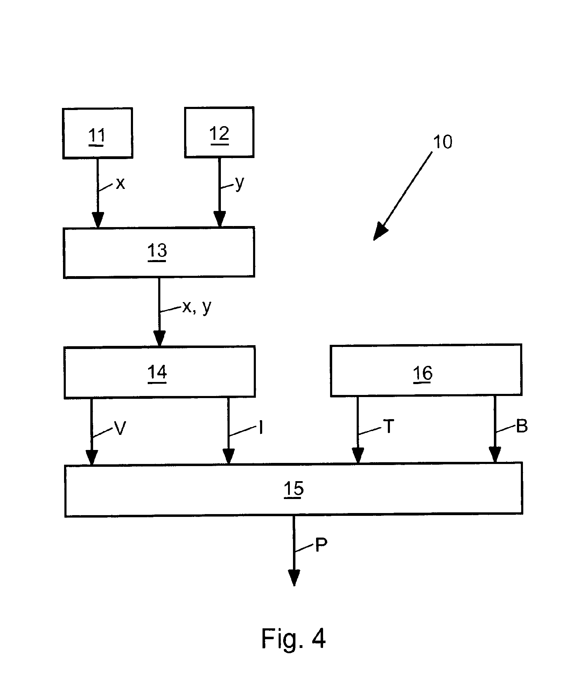

Fig. 4 zeigt ein schematisches Blockschaltbild eines ersten Ausführungsbeispiels einer Vorrichtung 10 zum Bereitstellen eines Pilotwarn-Signals P.

Die Vorrichtung 10 weist eine erste Einrichtung 11, eine zweite Einrichtung 12, eine dritte Einrichtung 13, eine vierte Einrichtung 14, eine fünfte Einrichtung 15 und eine sechste Einrichtung 16 auf.

Die erste Einrichtung 11 ist dazu eingerichtet, ein erstes Signal x zur Angabe eines Pedal-Winkels eines vom Piloten betätigbaren Pedals bereitzustellen.

Weiter ist die zweite Einrichtung 12 dazu eingerichtet, ein zweites Signal y bereitzustellen, welches eine direkte dynamische Abhängigkeit von dem Pedal-Winkel hat.

Ferner ist die dritte Einrichtung 13 zum jeweiligen Bilden eines Wertepaares x, y aus dem ersten Signal x und dem zweiten Signal y zu einem bestimmten Zeitpunkt k ausgelegt.

Die vierte Einrichtung 14 ist dazu eingerichtet, jeweils eine Winkeländerung V der Wertepaare x, y und eine Winkeländerung I des Inkrements der Wertepaare x, y zu zwei aufeinanderfolgenden Zeitpunkten k-1, k zu bestimmen.

Weiter ist die fünfte Einrichtung 15 dazu eingerichtet, das Pilotwarn-Signal P bei festgestellter Betätigung B des Pedals und festgestellter angeregter Taumelschwingung T des Flugzeuges zu generieren, falls die bestimmte Winkeländerung V der Wertepaare x, y größer als ein erster Schwellwert TH1 oder die bestimmte Winkeländerung I des Inkrements der Wertepaare x, y größer als ein zweiter Schwellwert TH2 ist.

Weiterhin ist die sechste Einrichtung 16 der Fig. 4 dazu eingerichtet, die Signale B und T bereitzustellen.

Aus den zu zwei aufeinanderfolgenden Zeitpunkten k-1, k gebildeten Inkrementen des Wertepaares x, y wird insbesondere die Änderung des Phasenwinkels berechnet.

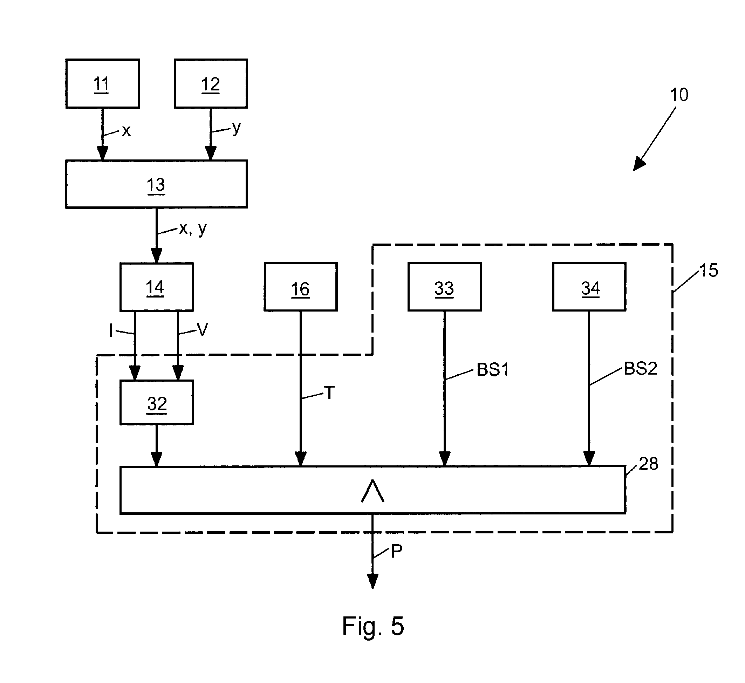

Beispielsweise sind der erste Schwellwert TH1 und der zweite Schwellwert ZH2 gleich groß. Insbesondere sind der erste Schwellwert TH1 und der zweite Schwellwert TH2 gleich Null. Fig. 5 zeigt ein schematisches Blockschaltbild eines zweiten Ausführungsbeispiels einer Vorrichtung 10 zum Bereitstellen eines Pilotwarn-Signals P. Das zweite Ausführungsbeispiel der Vorrichtung 10 gemäß Fig. 5 unterscheidet sich von dem ersten Ausführungsbeispiel der Vorrichtung 10 nach Fig. 4 in der Ausgestaltung der fünften Einrichtung 15.

Aus diesem Grund werden die erste bis vierte Einrichtung 11-14 sowie die sechste Einrichtung 16 zur Vermeidung von Wiederholungen nicht erneut detailliert erläutert.

Dabei hat die fünfte Einrichtung 15 eine Einrichtung 32, welche dazu eingerichtet ist, eingangsseitig die Winkeländerung V der Wertepaare x, y und die Winkeländerung I des Inkrements der Wertepaare x, y zu empfangen und abhängig davon ausgangsseitig ein erstes logisches Taumelschwingungs-Signal TS1 bereitzustellen. Dabei setzt die Einrichtung 32 das erste logische Taumelschwingungs-Signal TS1 auf einen positiven logischen Signalpegel, falls die Winkeländerung V größer als der erste Schwellwert TH1 ist oder die Winkeländerung I des Inkrements der Wertepaare x, y größer als der zweite Schwellwert TH2 bestätigt wird.

Des Weiteren weist die fünfte Einrichtung 15 eine Einrichtung 33 zum Bereitstellen eines ersten logischen Betätigungssignals BS1 auf.

Dabei bestimmt die Einrichtung 33 eine erste zeitliche Ableitung des Pedal-Winkels des bereitgestellten ersten Signals x zur Bereitstellung einer Pedalgeschwindigkeit. Weiterhin schätzt die Einrichtung 33 eine relevante Betätigung B des Pedals in Abhängigkeit des bereitgestellten ersten Signals x und der bestimmten ersten zeitlichen Ableitung und stellt abhängig davon das erste logische Betätigungssignal BS1 bereit.

Des Weiteren hat die fünfte Einrichtung 15 eine Einrichtung 34 zur Bereitstellung eines zweiten logischen Betätigungssignals BS2. Dazu sind in der Einrichtung 34 ein unkritischer Bereich für den Pedal-Winkel des vom Piloten betätigbaren Pedals, ein oberer kritischer Bereich oberhalb des unkritischen Bereichs und ein unterer kritischer Bereich unterhalb des unkritischen Bereichs festgelegt. Dabei detektiert die Einrichtung 34 auf eine Überschreitung über den unkritischen Bereich von dem oberen in den unteren kritischen Bereich oder von dem unteren in den oberen kritischen Bereich und setzt dann das zweite logische Betätigungssignal BS2 ausgangsseitig auf einen positiven logischen Signalpegel, falls eine solche Überschreitung detektiert ist.

Ein positiver Signalpegel BS2 wird - falls sich der Vorgang der Transition kritisch → kritisch nicht wiederholt - nach einer Zeit TM auf einen nichtpositiven Signalpegel zurückgesetzt.

Des Weiteren hat die fünfte Einrichtung 15 ein UND-Gatter 28, welches das erste Taumelschwingungs-Signal TS1, das erste logische Betätigungs-Signal BS1 und das zweite logische Betätigungs-Signal BS2 logisch UND-verknüpft und ausgangsseitig das Pilotwarn-Signal P auf einen positiven logischen Signalpegel setzt, falls TS1, BS1 und BS2 jeweils einen positiven logischen Signalpegel haben.

Ein positiver logischer Signalpegel, beispielsweise 2V, entspricht einer logischen Eins. Analog entspricht ein nichtpositive logischer Signalpegel, beispielsweise OV, einer logischen Null. Selbstverständlich ist auch eine andere Festlegung denkbar.

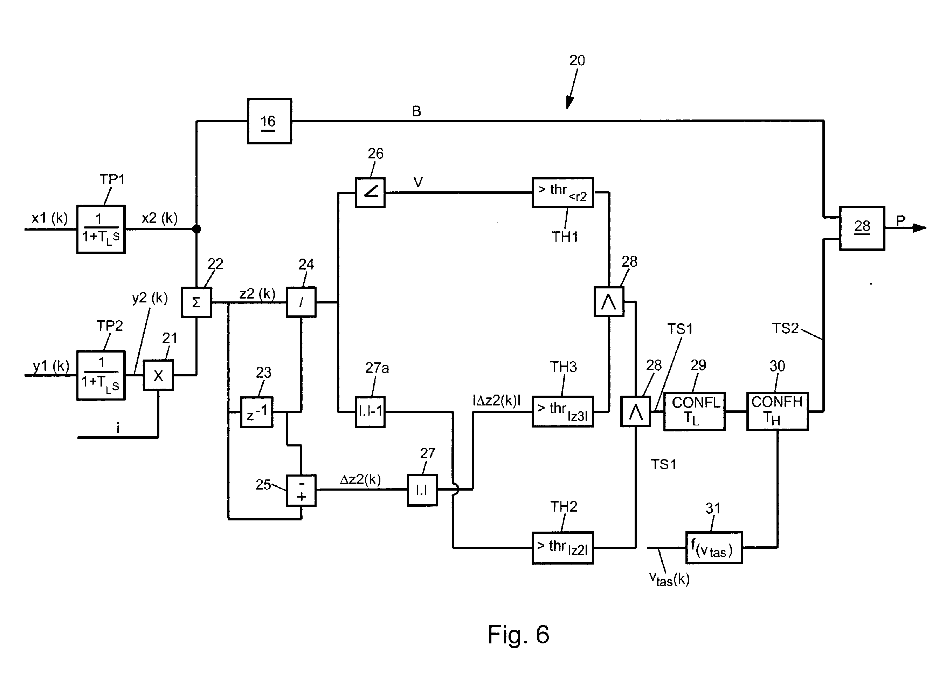

Fig. 6 zeigt ein schematisches Blockschaltbild einer Vorrichtung 20 zum Bereitstellen eines Pilotwarn-Signals P.

Die Vorrichtung 20 gemäß Fig. 6 basiert auf den beiden Ausführungsbeispielen der Vorrichtung 10 nach den Fig. 4 und 5.

Mit Bezug auf Fig. 6 bezeichnen folgende Variablen oder Bezugszeichen folgende Signale:

| | | |
|---|---|---|
| x1 (k) | | skaliertes erstes Signal zum Zeitpunkt k |
| x2 (k) | | tiefpassgefiltertes, skaliertes erstes Signal zum Zeitpunkt k |
| y1 (k) | | skaliertes zweites Signal zum Zeitpunkt k |
| y2 (k) | | tiefpassgefiltertes, skaliertes zweites Signal zum Zeitpunkt k |
| i | | imaginäre Zahl |
| z2 (k) | | komplexe Zahl z2 (k); z2 (k) = x2 (k) + i · y2 (k) |
| <z2 (k) | | Phasenwinkel der komplexen Zahl z2(k) |
| \| z2 (k) \| | | Betrag der komplexen Zahl z2(k) |
| V | | <(z2(k)/z2(k-1)) Winkeländerung in z2 in einem Zeitschritt k-1 → k |

Der Tiefpass TP1 empfängt eingangsseitig das skalierte erste Signal x1 (k) und stellt ausgangsseitig das tiefpassgefilterte skalierte erste Signal x2(k) bereit.

In analoger Weise tiefpassfiltert das Tiefpassfilter TP2 das skalierte zweite Signal y1 (k) zur Bereitstellung des tiefpassgefilterten skalierten zweiten Signals y2(k).

Des Weiteren wird das tiefpassgefilterte, skalierte zweite Signal y2(k) mit der imaginären i des Multiplikationsmittels 21 multipliziert.

Das Multiplikationsmittel 21 multipliziert das tiefpassgefilterte skalierte zweite Signal y2(k) mit i.

Das Summationsmittel 22 summiert x2(k) und i·y2 (k) zur Ausbildung der komplexen Zahl z2(k).

Das Verzögerungsmittel 23 ist zur Verzögerung der komplexen Zahl z2(k) um einen Zeitschritt zwischen k und k-1 geeignet. Das Divisionsmittel 24 ist zur Division der komplexen Zahlen z2 (k) /z2 (k-1) geeignet.

Die Einrichtung 25 ist zur Inkrementbildung und damit zur Bereitstellung von Δz2(k) geeignet.

Des Weiteren ist eine Einrichtung 26 zur Phasenwinkelberechnung vorgesehen, das ausgangsseitig die Phasenwinkeländerung V=<(z2 (k) /z2 (k-1) ) der komplexen Zahl z2(k) im Zeitschritt k+1 → k bereitstellt.

Die jeweilige Einrichtung 27 ist zur Bildung eines Betrages geeignet. Weiter ist das Einrichtung 27a zur Bildung des Betrages und anschließender Dekrementierung des Betrages um 1 geeignet.

Die Einrichtungen TH1-TH3 geben jeweils ein Ausgangs-Signal mit einem positiven logischen Signalpegel aus, falls das Eingangssignal größer als der jeweilige Schwellwert TH1-TH3 ist. Die jeweilige Einrichtung 28 ist zur UND-Verknüpfung der Eingangssignale geeignet und stellt ausgangsseitig ein Signal mit einem positiven logischen Signalpegel bereit, falls alle Eingangssignale einen positiven logischen Signalpegel aufweisen.

Das Ausgangssignal des rechten logischen UND-Gatters 28 in Fig. 6 entspricht einem ersten logischen Taumelschwingungs-Signal TS1 zur Angabe einer Taumelschwingung des Flugzeuges. Dieses wird auf einen positiven logischen Signalpegel gesetzt, falls der Phasenwinkel <z2(k) der komplexen Zahl größer als der erste Schwellwert TH1 ist, der Betrag des Inkrements |Δz2(k)|-1 der komplexen Zahl größer als der zweite Schwellwert TH2 ist und der Absolutbetrag |z2(k)| der komplexen Zahl größer als ein dritter Schwellwert ist.

Die Einrichtungen 29 und 30 sind als Bestätigungsblöcke zur Bestätigung eines nichtpositiven bzw. positiven Signalpegels des ersten Taumelschwingungs-Signals TS1 geeignet.

Das Zwischensignal TS1 wird auf einen nichtpositiven Signalpegel gesetzt, falls das Eingangssignal TS1 einen solchen in den letzten vergangenen Zeitraum der Länge TL angenommen hat. Dabei wird das zweite logische Taumelschwingungs-Signal TS2 auf einen positiven Wert gesetzt, falls das Zwischensignal TS1a einen solchen in den letzten vergangenen Zeitraum der Länge TH angenommen hat.

Zur Einstellung der zweiten Zeitdauer TH ist eine Einrichtung 31 vorgesehen, welches die zweite Zeitdauer TH in Abhängigkeit der kalibrierten Flugzeuggeschwindigkeit $V_{tas(k)}$ berechnet (oder in Abhängigkeit anderer, den momentanen Betriebspunkt des Flugzeugs charakterisierende Kenngrößen).

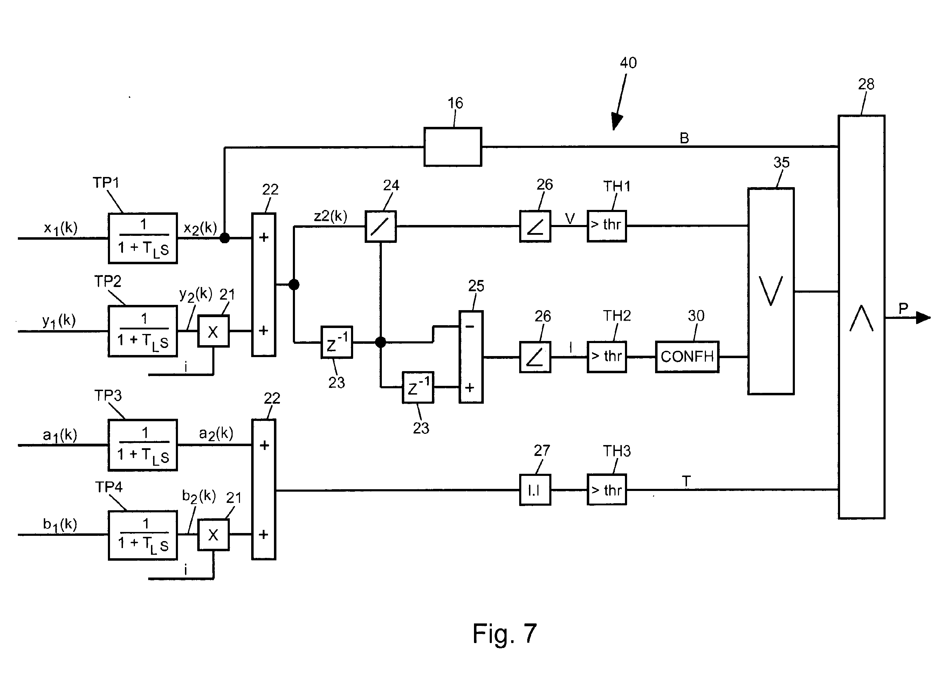

In Fig. 7 ist ein schematisches Blockschaltbild eines dritten Ausführungsbeispiels einer Vorrichtung 40 zum Bereitstellen eines Pilotwarn-Signals P dargestellt. Das dritte Ausführungsbeispiel der Vorrichtung 40 gemäß Fig. 7 basiert auf den beiden Ausführungsbeispielen der Vorrichtung 10 nach den Fig. 4 und 5.

Mit Bezug auf Fig. 7 bezeichnen folgende Variablen oder Bezugszeichen folgende Signale:

DRM       Pedal-Winkel

$DRM_{ref}$       unkritischer Referenzwert für den Pedal-Winkel;

x1(k)       skaliertes erstes Signal zum Zeitpunkt k, wobei $x_1 = \dfrac{DRM}{DRM_{ref}}$

x2 (k)       tiefpassgefiltertes, skaliertes erstes Signal zum Zeitpunkt k

β       Schiebewinkel des Flugzeuges;

$\beta_{ref}$       unkritischer Referenzwinkel des Schiebewinkels β

y1(k)    skaliertes zweites Signal zum Zeitpunkt k, wobei $Y1 = \dfrac{\beta}{\beta_{ref}}$

y2(k)    tiefpassgefiltertes, skaliertes zweites Signal zum Zeitpunkt k

i    imaginäre Zahl

z2(k)    komplexe Zahl z2(k); z2 (k) = x2(k) + i · y2(k)

<z2(k)    Phasenwinkel der komplexen Zahl z2(k)

| z2(k) |    Betrag der komplexen Zahl z2(k)

$a_1(k) = \dfrac{r}{r_{ref}}$ ;    wobei r die körperfeste Gierrate und $r_{ref}$ einen unkritischen Referenzwert für die Gierrate r darstellen. Der Referenzwert $r_{ref}$ kann fest vorgegeben sein oder adaptiv in Abhängigkeit vorbestimmter Flugzeugparameter eingestellt werden;

$a_2(k)$    tiefpassgefiltertes $a_1(k)$ ;

$b_1(k) = \dfrac{p}{p_{ref}}$ ,    wobei p die körperfeste Rollrate und $p_{ref}$ einen unkritischen Referenzwert für die Rollraet p darstellen. Der Referenzwert $p_{ref}$ kann fest vorgegeben sein oder adaptiv in Abhängigkeit vorbestimmter Flugzeugparameter eingestellt werden;

V=    <(z2(k)/z2(k-1))

Das UND-Gatter 28 der Vorrichtung 40 stellt dann ein Pilotwarn-Signal P bereit, wenn eine Betätigung B des Pedals festgestellt ist, eine angeregte Taumelschwingung T des Flugzeuges festgestellt ist, und falls die bestimmte Winkeländerung V größer als ein erster Schwellwert TH1 ist oder eine Winkeländerung I des Inkrements der Wertepaare größer als ein zweiter Schwellwert TH2 ist und dies zusätzlich durch Bestätigungsmittel 30 bestätigt ist.

Obwohl die vorliegende Erfindung anhand bevorzugter Ausführungsbeispiele vorliegend beschrieben wurde, ist sie darauf nicht beschränkt, sondern auf vielfältige Weise modifizierbar.

**Bezugszeichenliste**

10, 20, 40    Vorrichtung
11    erste Einrichtung
12    zweite Einrichtung
13    dritte Einrichtung
14    vierte Einrichtung
15    fünfte Einrichtung
16    sechste Einrichtung
21    Multiplikationsmittel
22    Summationsmittel
23    Verzögerungsmittel
24    Divisionsmittel
25    Einrichtung zur Inkrementbildung
26    Einrichtung zur Phasenwinkelberechung
27    Einrichtung zur Bildung des Absolutbetrages
28    UND-Gatter
29-34    Einrichtungen
35    ODER-Gatter
a    körperfeste Gierrate
b    körperfeste Rollrate
x    erstes Signal
y    zweites Signal
k    Zeitpunkt
V    Verhältnis
I    Inkrement
B    Signal zur festgestellten Betätigung des Pedals
BS1    erstes logisches Betätigungssignal

BS2      zweites logisches Betätigungssignal
P        Pilotwarn-Signal

**Patentansprüche**

1.  Verfahren zum Bereitstellen eines Pilotwarn-Signals (P) für einen Piloten eines Flugzeuges, mit den Schritten:

    (a) Bereitstellen eines ersten Signals (x) zur Angabe eines Pedal-Winkels eines vom Piloten betätigbaren Pedals; und
    (b) Bereitstellen eines zweiten Signals (y), welches eine direkte dynamische Abhängigkeit von dem Pedal-Winkel hat, und welches als ein Schiebewinkel-Signal zur Angabe eines Schiebewinkels des Flugzeuges, als ein lateraler Lastfaktor des Flugzeuges oder als eine negative Drehrate des Flugzeuges um die Hochachse des Flugzeuges ausgebildet ist;
    **gekennzeichnet durch** die Schritte:
    (c) jeweiliges Bilden eines Wertepaares (x, y) aus dem ersten Signal (x) und zweiten Signal (y) als komplexe Zahl (z2(k)) mit dem ersten Signal (x) als Realteil und dem zweiten Signal (y) als Imaginärteil zu einem bestimmten Zeitpunkt (k);
    (d) jeweiliges Bestimmen einer Phasenwinkeländerung (V) der komplexen Zahl (z2(k)) und einer Phasenwinkeländerung (I) des Inkrements der komplexen Zahl (z2(k)) zu zwei aufeinanderfolgenden Zeitpunkten (k-1, k); und
    (e) Generieren des Pilotwarn-Signals (P) bei festgestellter Betätigung (B) des Pedals und festgestellter angeregter Taumelschwingung (T) des Flugzeuges und falls die bestimmte Phasenwinkeländerung (V) der komplexen Zahl (z2(k)) größer als ein erster Schwellwert (TH1) ist oder die bestimmte Phasenwinkeländerung (I) des Inkrements der komplexen Zahl (z2(k)) größer als ein zweiter Schwellwert (TH2) ist.

2.  Verfahren nach Anspruch 1,
    **dadurch gekennzeichnet,**
    **dass** das zweite Signal (y) als ein rekonstruiertes Schiebewinkel-Signal des Flugzeugs zur Angabe eines Schiebewinkels des Flugzeuges ausgebildet ist.

3.  Verfahren nach einem der vorherigen Ansprüche,
    **dadurch gekennzeichnet,**
    **dass** folgende Schritte zum Feststellen der Betätigung (B) des Pedals zur Vermeidung von Fehlalarmen vorgesehen sind:

    - Bestimmen einer ersten zeitlichen Ableitung des Pedal-Winkels des bereitgestellten ersten Signals (x) zur Bereitstellung einer Pedalgeschwindigkeit; und
    - Schätzen einer relevanten Betätigung (B) des Pedals in Abhängigkeit des bereitgestellten ersten Signals (x) und der bestimmten ersten zeitlichen Ableitung zur Bereitstellung eines ersten logischen Betätigungssignals (BS1).

4.  Verfahren nach einem der vorherigen Ansprüche,
    **dadurch gekennzeichnet,**
    **dass** folgende Schritte zum Feststellen der Betätigung (B) des Pedals zur Vermeidung von Fehlalarmen vorgesehen sind:

    - Bereitstellen eines unkritischen Bereiches für den Pedal-Winkel des vom Piloten betätigbaren Pedals;
    - Bestimmen eines oberen kritischen Bereiches oberhalb des unkritischen Bereiches;
    - Bestimmen eines unteren kritischen Bereiches unterhalb des unkritischen Bereiches;
    - Detektieren auf eine Überschreitung über den unkritischen Bereich von dem oberen in den unteren kritischen Bereich oder von dem unteren in den oberen kritischen Bereich; und
    - Setzen eines zweiten logischen Betätigungssignals (BS2) auf einen positiven logischen Signalpegel bei einer detektierten Überschreitung.

5.  Verfahren nach den Ansprüchen 3 und 4,
    **dadurch gekennzeichnet,**
    **dass** das Pilotwarn-Signal (P) generiert wird, falls das erste (BS1) und das zweite logische Betätigungssignal (BS2) auf einen logischen Signalpegel gesetzt sind und falls die Phasenwinkeländerung (V) der komplexen Zahl (z2(k)) größer als der erste Schwellwert (TH1) ist oder die Phasenwinkeländerung des Inkrements (I) der komplexen Zahl (z2(k)) größer als der zweite Schwellwert (TH2) ist.

6.  Verfahren nach einem der vorherigen Ansprüche,
    **dadurch gekennzeichnet,**
    **dass** das erste Signal (x) mittels einer Messung des Pedal-Winkels bereitgestellt wird, oder
    **dass** das erste Signal (x) in Abhängigkeit eines gemessenen Seitenruderausschlags oder in Abhängigkeit eines gemessenen Seitenruderausschlages und eines Gierdämpfungs-Signals berechnet wird.

7.  Verfahren nach einem der vorherigen Ansprüche,
    **dadurch gekennzeichnet,**
    **dass** das erste Signal (x) und das zweite Signal (y) zu bestimmten Zeitpunkten (k) abgetastet, skaliert und gefiltert werden.

8.  Verfahren nach Anspruch 7,
    **dadurch gekennzeichnet,**
    **dass** ein erstes logisches Taumelschwingungs-Signal (TS1) zur Angabe einer Taumelschwingung des Flugzeuges auf einen positiven logischen Signalpegel gesetzt wird, falls der Phasenwinkel (<z2(k)) der komplexen Zahl größer als der erste Schwellwert (TH1) ist, der Betrag des Inkrements (|Δz2(k)|) minus 1 der komplexen Zahl größer als der zweite Schwellwert (TH2) ist und der Absolutbetrag der Änderung (|Δz2(k)|) der komplexen Zahl größer als ein dritter Schwellwert (TH3) ist, und/oder
    **dass** ein zweites logisches Taumelschwingungs-Signal (TS2) zur Angabe einer Taumelschwingung des Flugzeuges auf einen positiven logischen Signalpegel gesetzt wird, falls das erste logische Taumelschwingungs-Signal (TS 1) für eine erste vorbestimmte Zeitdauer (TL) auf einen positiven logischen Signalpegel gesetzt war, und wieder auf einen negativen logischen Signalpegel gesetzt wird, falls das erste logische Taumelschwingungs-Signal (TS1) für eine zweite vorbestimmte Zeitdauer (TH) auf einen positiven logischen Signalpegel gesetzt war.

9.  Verfahren nach Anspruch 8,
    **dadurch gekennzeichnet,**
    **dass** das Pilotwarn-Signal (P) generiert wird, falls das erste logische Taumelschwingungs-Signal (TS1) auf einen positiven logischen Signalpegel gesetzt ist und falls das erste (BS1) und das zweite logische Betätigungssignal (BS2) auf einen logischen Signalpegel gesetzt sind und/oder
    **dass** das Pilotwarn-Signal (P) generiert wird, falls das zweite logische Taumel-schwingungs-Signal (TS2) auf einen positiven logischen Signalpegel gesetzt ist und falls das erste (BS1) und das zweite logische Betätigungssignal (BS2) auf einen logischen Signalpegel gesetzt sind.

10. Computerprogrammprodukt,
    welches auf einer programmgesteuerten Einrichtung die Durchführung eines Verfahrens nach einem der Ansprüche 1 bis 9 veranlasst.

11. Warnvorrichtung (10, 20, 40) zum Bereitstellen eines für einen Piloten eines Flugzeuges vorgesehenen Pilotwarn-Signals (P), insbesondere unter Verwendung eines Verfahrens nach einem der Ansprüche 1 bis 9,
    mit einer ersten Einrichtung (11), welche dazu ausgelegt ist, ein erstes Signal (x) bereitzustellen, welches eine Information über einen Pedal-Winkel eines vom Piloten betätigbaren Pedals enthält; und
    mit einer zweiten Einrichtung (12), welche dazu ausgelegt ist, ein zweites Signal (y), welches eine direkte dynamische Abhängigkeit von dem Pedal-Winkel aufweist und welches als ein Schiebewinkel-Signal zur Angabe eines Schiebewinkels des Flugzeuges, als ein lateraler Lastfaktor des Flugzeuges oder als eine negative Drehrate des Flugzeuges um die Hochachse des Flugzeuges ausgebildet ist, bereitzustellen;
    **gekennzeichnet durch**
    eine dritte Einrichtung (13), welche dazu ausgelegt ist, zu einem vorbestimmten Zeitpunkt (k) ein jeweiliges Wertepaar (x, y) aus dem ersten Signal (x) und dem zweiten Signal (y) als komplexe Zahl (z2(k)) mit dem ersten Signal (x) als Realteil und dem zweiten Signal (y) als Imaginärteil zu bilden;
    eine vierte Einrichtung (14), welche dazu ausgelegt ist, jeweils eine Phasenwinkeländerung (V) der komplexen Zahl (z2(k)) und eine Phasenwinkeländerung (I) des Inkrements der komplexen Zahl (z2(k)) zu zwei aufeinanderfolgenden Zeitpunkten (k-1, k) zu bestimmen; und
    eine fünfte Einrichtung (15), welche dazu ausgelegt ist, das Pilotwarn-Signals (P) zu generieren, sofern eine Betätigung (B) des Pedals und eine angeregte Taumelschwingung (T) des Flugzeuges festgestellt sind und sofern die bestimmte Phasenwinkeländerung (V) der komplexen Zahl (z2(k)) größer als ein erster Schwellwert (TH1) ist oder die bestimmte Phasenwinkeländerung (I) des Inkrements der komplexen Zahl (z2(k)) größer als ein zweiter Schwellwert (TH2) ist.

**12.** Warnvorrichtung nach Anspruch 11,
**dadurch gekennzeichnet,**
**dass** die erste Einrichtung (11) einen als potentiometrisch, induktiv, kapazitiv und/oder optisch ausgebildeten Winkelaufnehmer und/oder Linearwandler aufweist, der das erste Signal (x) aus einem gemessenen Differenzwinkel bzw. Differenzweg des Pedals erzeugt; und/oder
**dass** die zweite Einrichtung (12) eine Messeinrichtung umfasst, die eine negative Drehrate des Flugzeugs um seine Hochachse durch direkte Messung erfasst und daraus das zweite Signal (y) ableitet; und/oder
**dass** die fünfte Einrichtung (15) aufweist:

- eine optische Warneinrichtung, welche eine Signalleuchte und/oder einen Monitor beinhaltet, und/oder
- eine akustische Warneinrichtung, welche einen Lautsprecher beinhaltet, und/oder
- eine haptische Warneinrichtung, welche eine Vorrichtung zur Erzeugung einer Vibration beinhaltet.

**13.** Warnvorrichtung nach Anspruch 11,
**dadurch gekennzeichnet,**
**dass** eine programmgesteuerte Einrichtung, insbesondere ein Mikrocontroller oder Mikroprozessor, vorgesehen ist, welche zumindest eine der ersten bis fünften Einrichtungen und vorzugsweise sämtliche der ersten bis fünften Einrichtungen beinhaltet.

**14.** Warnvorrichtung nach Anspruch 13,
**dadurch gekennzeichnet,**
**dass** die programmgesteuerte Einrichtung dazu ausgelegt ist, das Wertepaar (x, y) zu bilden, und/oder
**dass** die programmgesteuerte Einrichtung dazu ausgelegt ist, das erste Signal (x) aus einem erfassten Seitenruderwinkel und/oder einer erfassten Gierdämpfung zu berechnen und/oder das zweite Signal (y) durch eine Arithmetik mit komplexen Zahlen oder durch eine Polardarstellung zu bestimmen.

**15.** Warnvorrichtung nach einem der Ansprüche 11 bis 14,
**dadurch gekennzeichnet,**
**dass** ein Speicher vorgesehen ist, in welchem mindestens eine komplexe Zahl (z2(k)) zu einem ersten Zeitpunkt (k-1) und mindestens ein Inkrement der komplexe Zahl (z2(k))zu dem ersten Zeitpunkt (k-1) ablegbar sind, und dass die programmgesteuerte Einrichtung dazu ausgebildet ist, die Phasenwinkeländerung (V) aus der komplexen Zahl (z2(k)) zu dem ersten Zeitpunkt (k-1) und der komplexen Zahl (z2(k)) zu einem zweiten Zeitpunkt (k) und die Phasenwinkeländerung (I) des Inkrements aus dem Inkrement der komplexen Zahl (z2(k)) zu dem ersten Zeitpunkt (k-1) und dem Inkrement der komplexen Zahl (z2(k)) zu dem zweiten Zeitpunkt (k) zu bestimmen.

## Claims

**1.** Method for providing a pilot warning signal (P) for a pilot of an aircraft, comprising the steps of:

(a) providing a first signal (x) to indicate a pedal angle of a pedal which can be actuated by the pilot; and
(b) providing a second signal (y) which is directly dynamically dependent upon the pedal angle and which is formed as a sideslip angle signal to indicate a sideslip angle of the aircraft, as a lateral load factor of the aircraft or as a negative rotation rate of the aircraft about the vertical axis of the aircraft;
**characterised by** the steps of
(c) in each case forming a pair of values (x, y) from the first signal (x) and the second signal (y) as a complex number (z2(k)) with the first signal (x) as a real part and the second signal (y) as an imaginary part at a specific time (k);
(d) in each case determining a phase angle change (V) of the complex number (z2(k)) and a phase angle change (I) of the increment of the complex number (z2(k)) at two successive times (k-1, k); and
(e) generating the pilot warning signal (P) when actuation (B) of the pedal and a stimulated Dutch roll (T) of the aircraft are ascertained and if the determined phase angle change (V) of the complex number (z2(k)) is greater than a first threshold value (TH1) or the determined phase angle change (I) of the increment of the complex number (z2(k)) is greater than a second threshold value (TH2).

**2.** Method as claimed in claim 1,
**characterised in that**
the second signal (y) is formed as a reconstructed sideslip angle signal of the aircraft to indicate a sideslip angle of the aircraft.

**3.** Method as claimed in any one of the preceding claims, **characterised in that**
the following steps are provided for ascertaining the actuation (B) of the pedal in order to avoid false alarms:

- determining a first temporal derivative of the pedal angle of the provided first signal (x) to provide a pedal speed; and
- estimating a relevant actuation (B) of the pedal in dependence upon the provided first signal (x) and the determined first temporal derivative to provide a first logic actuation signal (BS1).

**4.** Method as claimed in any one of the preceding claims, **characterised in that**
the following steps are provided to ascertain the actuation (B) of the pedal in order to avoid false alarms:

- providing a non-critical range for the pedal angle of the pedal which can be actuated by the pilot;
- determining an upper critical range above the non-critical range;
- determining a lower critical range below the non-critical range;
- detecting an exceedance over the non-critical range from the upper into the lower critical range or from the lower into the upper critical range; and
- setting a second logic actuation signal (BS2) to a positive logic signal level when exceedance is detected.

**5.** Method as claimed in claims 3 and 4,
**characterised in that**
the pilot warning signal (P) is generated if the first (BS1) and second logic actuation signals (BS2) are set to a logic signal level and if the phase angle change (V) of the complex number (z2(k)) is greater than the first threshold value (TH1) or the phase angle change of the increment (I) of the complex number (z2(k)) is greater than the second threshold value (TH2).

**6.** Method as claimed in any one of the preceding claims,
**characterised in that**
the first signal (x) is provided by means of a measurement of the pedal angle, or
that the first signal (x) is calculated in dependence upon a measured rudder deflection or in dependence upon a measured rudder deflection and a yaw damping signal.

**7.** Method as claimed in any one of the preceding claims,
**characterised in that**
the first signal (x) and the second signal (y) are sampled, scaled and filtered at specific times (k).

**8.** Method as claimed claim 7,
**characterised in that**
a first logic Dutch roll signal (TS1) is set to a positive logic signal level to indicate a Dutch roll of the aircraft if the phase angle (<z2(k)) of the complex number is greater than the first threshold value (TH1), the amount of the increment ($|\Delta z2(k)|$) minus 1 of the complex number is greater than the second threshold value (TH2) and the absolute amount of the change ($|\Delta z2(k)|$) in the complex number is greater than a third threshold value (TH3), and/or a second logic Dutch roll signal (TS2) is set to a positive logic signal level to indicate a Dutch roll of the aircraft if the first logic Dutch roll signal (TS1) has been set to a positive logic signal level for a first predetermined duration (TL), and is set to a negative logic signal level if the first logic Dutch roll signal (TS1) has been set to a positive logic signal level for a second predetermined duration (TH).

**9.** Method as claimed in claim 8,
**characterised in that**
the pilot warning signal (P) is generated if the first logic Dutch roll signal (TS1) is set to a positive logic signal level and if the first (BS1) and the second logic actuation signal (BS2) are set to a logic signal level and/or the pilot warning signal (P) is generated if the second logic Dutch roll signal (TS2) is set to a positive logic signal level and if the first (BS1) and the second logic actuation signal (BS2) are set to a logic signal level.

10. Computer program product
which causes the method as claimed in any one of claims 1 to 9 to be carried out on a program-controlled apparatus.

11. Warning device (10, 20, 40) for providing a pilot warning signal (P) intended for a pilot of an aircraft, in particular using a method as claimed in any one of claims 1 to 9,
having a first apparatus (11) which is arranged to provide a first signal (x) which contains information about a pedal angle of a pedal which can be actuated by the pilot; and
having a second apparatus (12) which is arranged to provide a second signal (y) which is directly dynamically dependent on the pedal angle and which is formed as a sideslip angle signal to indicate a sideslip angle of the aircraft, as a lateral load factor of the aircraft or as a negative rotation rate of the aircraft about the vertical axis of the aircraft;
**characterised by**
a third apparatus (13) which is arranged to form, at a specific time (k), a respective pair (x, y) of values from the first signal (x) and the second signal (y) as a complex number (z2(k)) with the first signal (x) as a real part and the second signal (y) as an imaginary part;
a fourth apparatus (14) which is arranged to determine, in each case, a phase angle change (V) of the complex number (z2(k)) and of a phase angle change (I) of the increment of the complex number (z2(k)) at two successive times (k-1, k); and
a fifth apparatus (15) which is arranged to generate the pilot warning signal (P) if actuation (B) of the pedal and a stimulated Dutch roll (T) of the aircraft are ascertained and if the predetermined phase angle change (V) of the complex number (z2(k)) is greater than a first threshold value (TH1) or the determined phase angle change (I) of the increment of the complex number (z2(k)) is greater than a second threshold value (TH2).

12. Warning device as claimed in claim 11,
**characterised in that**
the first apparatus (11) comprises a potentiometric, inductive, capacitive and/or optical angle sensor and/or linear converter which produces the first signal (x) from a measured differential angle or differential path of the pedal; and/or that the second apparatus (12) comprises a measuring apparatus which detects a negative rotation rate of the aircraft about its vertical axis by direct measurement and derives therefrom the second signal (y) and/or
the fifth apparatus (15) comprises:

- an optical warning apparatus which contains a signal light and/or a monitor, and/or
- an acoustic warning apparatus which contains a loudspeaker, and/or
- a haptic warning apparatus which contains a device for producing a vibration.

13. Warning device as claimed in claim 11,
**characterised in that**
a program-controlled apparatus, in particular a microcontroller or microprocessor, is provided which contains at least one of the first to fifth apparatuses and preferably all of the first to fifth apparatuses.

14. Warning device as claimed in claim 13,
**characterised in that**
the program-controlled apparatus is arranged to form the pair (x, y) of values, and/or
the program-controlled apparatus is arranged to calculate the first signal (x) from a detected rudder angle and/or detected yaw damping and/or to determine the second signal (y) by arithmetic using complex numbers or by a polar diagram.

15. Warning device as claimed in any one of claims 11 to 14, **characterised in that**
a memory is provided in which at least one complex number (z2(k)) can be stored at a first time (k-1) and at least one increment of the complex number (z2(k)) can be stored at the first time (k-1), and that the program-controlled apparatus is arranged to determine the phase angle change (V) from the complex number (z2(k)) at the first time (k-1) and from the complex number (z2(k)) at a second time (k) and to determine the phase angle change (I) of the increment from the increment of the complex number (z2(k)) at the first time (k-1) and from the increment of the complex number (z2(k)) at the second time (k).

**Revendications**

1. Procédé de fourniture d'un signal d'avertissement du pilote (P) pour un pilote d'un avion, comportant les étapes de :

   (a) fourniture d'un premier signal (x) pour indiquer l'angle d'une pédale pouvant être actionnée par le pilote ; et
   (b) fourniture d'un second signal (y), qui dépend dynamiquement et directement de l'angle de la pédale, et qui se présente sous la forme d'un signal de dérapage pour indiquer un angle de dérapage de l'avion, d'un facteur de charge latéral de l'avion ou d'une vitesse de rotation négative de l'avion autour de l'axe vertical de l'avion ;
   **caractérisé par** les étapes suivantes :
   (c) formation respective d'une paire de valeurs (x, y) à partir du premier signal (x) et du second signal (y) en tant que nombre complexe (z2(k)) avec le premier signal (x) en tant que partie réelle et le second signal (y) en tant que partie imaginaire à un instant déterminé (k) ;
   (d) détermination respective d'une variation d'angle de phase (V) du nombre complexe (z2(k)) et d'une variation d'angle de phase (I) de l'incrément du nombre complexe (z2(k)) à deux instants successifs (k-1, k) ; et
   (e) production du signal d'avertissement du pilote (P) en cas d'actionnement (B) constaté de la pédale et de l'activation d'une oscillation en nutation (T) constatée de l'avion et dans le cas où la variation d'angle de phase (V) déterminée du nombre complexe (z2(k)) est supérieure à la première valeur de seuil (TH1) ou la variation d'angle de phase (I) déterminée de l'incrément du nombre complexe (z2(k)) est supérieure à une seconde valeur de seuil (TH2).

2. Procédé selon la revendication 1,
   **caractérisé par le fait que**
   le second signal (y) est formé comme un signal d'angle de dérapage reconstruit de l'avion pour indiquer un angle de dérapage de l'avion.

3. Procédé selon l'une quelconque des revendications précédentes,
   **caractérisé par le fait que**
   les étapes suivantes sont prévues pour déterminer l'actionnement (B) de la pédale pour éviter les fausses alarmes :

   - détermination d'une première dérivation temporelle de l'angle de pédale du premier signal (x) fourni pour la fourniture d'une vitesse de pédale ; et
   - estimation de l'actionnement (B) approprié de la pédale en fonction du premier signal (x) fourni et de la première dérivation temporelle déterminée pour la fourniture d'un premier signal d'actionnement logique (BS1).

4. Procédé selon l'une quelconque des revendications précédentes,
   **caractérisé par le fait que**
   les étapes suivantes sont prévues pour déterminer l'actionnement (B) de la pédale pour éviter les fausses alarmes :

   - fourniture d'une zone non critique pour l'angle de pédale de la pédale actionnée par le pilote ;
   - détermination d'une zone supérieure critique au-dessus de la zone non critique ;
   - détermination d'une zone inférieure critique sous la zone non critique ;
   - détection d'un dépassement au-dessus de la zone non critique, de la zone critique supérieure à la zone critique inférieure, ou de la zone critique inférieure à la zone critique supérieure ; et
   - établissement d'un second signal d'actionnement logique (BS2) à un niveau de signal logique en cas de détection d'un dépassement.

5. Procédé selon les revendications 3 et 4,
   **caractérisé par le fait que**
   le signal d'avertissement du pilote (P) est produit dans le cas où le premier (BS1) et le second signal d'actionnement logique (BS2) sont établis à un niveau de signal logique et dans le cas où la variation d'angle de phase (V) du nombre complexe (z2(k)) est supérieure à la première valeur de seuil (TH1) ou la variation d'angle de phase de l'incrément (1) du nombre complexe (z2(k)) est supérieure à la seconde valeur de seuil (TH2).

6. Procédé selon l'une quelconque des revendications précédentes,
   **caractérisé par le fait que**
   le premier signal (x) est fourni au moyen d'une mesure de l'angle de pédale, ou que le premier signal (x) est calculé en fonction d'un braquage de gouverne latérale mesuré ou en fonction d'un braquage de gouverne latérale mesuré et d'un signal d'amortissement.

**7.** Procédé selon l'une quelconque des revendications précédentes,
**caractérisé par le fait que**
le premier signal (x) et le second signal (y) sont détectés, cadrés et filtrés à des instants déterminés (k).

**8.** Procédé selon la revendication 7,
**caractérisé par le fait que**
un premier signal d'oscillation en nutation logique (TS1) pour indiquer une oscillation en nutation de l'avion est établi à un niveau de signal logique positif, dans le cas où l'angle de phase (<z2(k)) du nombre complexe est supérieur à la première valeur de seuil (TH1), la grandeur de l'incrément ((|∆z2(k)|) moins 1 du nombre complexe est supérieure à la seconde valeur de seuil (TH2) et la grandeur absolue de la variation (|∆z2(k)|) d'un nombre complexe est supérieure à la troisième valeur de seuil (TH3), et/ou que
un second signal d'oscillation en nutation logique (TS2) pour indiquer une oscillation en nutation de l'avion est établi à un niveau de signal logique positif, dans le cas où le premier signal d'oscillation en nutation logique (TS1) était établi pour une première période de temps prédéterminée (TL) à un niveau de signal logique positif, et est à nouveau établi à un niveau de signal logique négatif, dans le cas où le premier signal d'oscillation en nutation logique (TS1) était établi pour une seconde période de temps prédéterminée (TH) à un niveau de signal logique positif.

**9.** Procédé selon la revendication 8,
**caractérisé par le fait que**
le signal d'avertissement du pilote (P) est produit dans le cas où une première oscillation en nutation logique (TS1) est établie à un niveau de signal logique positif et dans le cas où le premier (BS1) et le second signal d'actionnement logique (BS2) sont établis à un niveau de signal logique et/ou que
le signal d'avertissement du pilote (P) est produit dans le cas où le second signal d'oscillation en nutation logique (TS2) est établi à un niveau de signal logique positif et dans le cas où le premier (BS1) et le second signal d'actionnement logique (BS2) sont établis à un niveau de signal logique.

**10.** Progiciel informatique,
qui déclenche l'exécution sur un dispositif commandé par programme d'un procédé selon l'une des revendications 1 à 9.

**11.** Dispositif d'avertissement (10, 20, 40) pour fournir un signal d'avertissement du pilote (P) prévu pour un pilote d'un avion, en particulier en utilisant un procédé selon l'une des revendications 1 à 9,
comportant un premier dispositif (11) qui est agencé pour fournir un premier signal (x), qui contient une information sur un angle de pédale d'une pédale actionnable par le pilote ; et
comportant un second dispositif (12) qui est agencé pour fournir un second signal (y), qui dépend dynamiquement et directement de l'angle de la pédale, et qui se présente sous la forme d'un signal d'angle de dérapage pour indiquer un angle de dérapage de l'avion, d'un facteur de charge latéral de l'avion ou d'une vitesse de rotation négative de l'avion autour de l'axe vertical de l'avion ; **caractérisé par**
un troisième dispositif (13), qui est agencé pour former à un instant déterminé (k) une paire de valeurs (x, y) à partir du premier signal (x) et du second signal (y) en tant que nombre complexe (z2(k)) avec le premier signal (x) en tant que partie réelle et le second signal (y) en tant que partie imaginaire ;
un quatrième dispositif (14), qui est agencé pour déterminer respectivement une variation d'angle de phase (V) du nombre complexe (z2(k)) et une variation d'angle de phase (I) de l'incrément du nombre complexe (z2(k)) à deux instants successifs (k-1, k) ; et
un cinquième dispositif (15), qui est agencé pour produire le signal d'avertissement du pilote (P) à condition qu'un actionnement (B) de la pédale et qu'une activation d'oscillation en nutation (T) de l'avion soient constatés et à condition que la variation d'angle de phase (V) déterminée du nombre complexe (z2(k)) soit supérieure à la première valeur de seuil (TH1) ou la variation d'angle de phase (I) déterminée de l'incrément du nombre complexe (z2(k)) est supérieure à une seconde valeur de seuil (TH2) .

**12.** Dispositif d'avertissement selon la revendication 11, **caractérisé par le fait que**
le premier dispositif (11) présente un capteur d'angles et/ou un convertisseur linéaire de type potentiométrique, inductif, capacitif et/ou optique, qui produit le premier signal (x) à partir de la mesure d'un angle différentiel ou d'une course différentielle de la pédale ; et/ou que le second dispositif (12) comprend un dispositif de mesure qui détecte une vitesse de rotation négative de l'avion autour de son axe vertical par mesure directe et en déduit le second signal (y) ; et/ou que le cinquième dispositif (15) présente :

- un dispositif d'avertissement optique, qui comporte un avertisseur lumineux et/ou un écran, et/ou

**15**

- un dispositif acoustique qui comporte un haut-parleur, et/ou
- un dispositif haptique qui comporte un dispositif de production d'une vibration.

**13.** Dispositif d'avertissement selon la revendication 11, **caractérisé par le fait que**
un dispositif commandé par programme est prévu, en particulier un micro-contrôleur ou un micro-processeur, qui contient au moins un des premier au cinquième dispositifs et préférentiellement tous les dispositifs, du premier au cinquième.

**14.** Dispositif d'avertissement selon la revendication 13, **caractérisé par le fait que**
le dispositif commandé par programme est agencé pour former la paire de valeurs (x, y), et/ou que le dispositif commandé par programme est agencé pour calculer le premier signal (x) à partir d'un angle de gouverne latérale détecté et/ou d'un amortissement détecté et/ou pour déterminer le second signal (y) arithmétiquement avec des nombres complexes ou en représentation polaire.

**15.** Dispositif d'avertissement selon l'une des revendications 11 à 14,
**caractérisé par le fait que**
une mémoire est prévue, dans laquelle au moins un nombre complexe (z2(k)) à un premier instant (k-1) et au moins un incrément du nombre complexe (z2(k)) au premier instant (k-1) peuvent être stockés, et que le dispositif commandé par programme est formé pour déterminer la variation d'angle de phase (V) à partir du nombre complexe (z2(k)) au premier instant (k-1) et du nombre complexe (z2(k)) à un second instant (k) et la variation d'angle de phase (I) de l'incrément à partir de l'incrément du nombre complexe (z2(k)) au premier instant (k-1) et de l'incrément du nombre complexe (z2(k)) au second moment (k).

Fig. 1

Fig. 3

Fig. 2

EP 2 318 893 B1

Fig. 4

Fig. 5

Fig. 6

EP 2 318 893 B1

Fig. 7

**IN DER BESCHREIBUNG AUFGEFÜHRTE DOKUMENTE**

**In der Beschreibung aufgeführte Patentdokumente**

- US 6002349 A